# EUROPÄISCHE PATENTSCHRIFT

(11) **EP 2 293 391 B1**
(45) Veröffentlichungstag und Bekanntmachung des Hinweises auf die Patenterteilung: **26.10.2016**
(21) Anmeldenummer: 10173524.9
(22) Anmeldetag: 20.08.2010
(51) Int. Cl.: H01R 13/639, B60L 11/18, H01R 13/70

(54) **Vorrichtung und Verfahren zur Verriegelung eines Steckers in einer Steckdose**
Device and method for locking a connector into a socket
Dispositif et procédé de verrouillage d'un connecteur dans une prise

(30) Priorität: 02.09.2009 DE 102009039652
(43) Veröffentlichungstag der Anmeldung: 09.03.2011
(73) Patentinhaber: Elektro-Bauelemente GmbH, 44536 Lünen (DE)
(72) Erfinder: Kachouh, Checrallah, 44227, Dortmund (DE); Jendrusch, Peter, 44536, Lünen (DE)
(74) Vertreter: Wickord, Wiro

(56) Entgegenhaltungen:
- EP-A2- 0 635 908
- DE-A1- 10 102 242
- DE-A1- 19 544 942
- DE-A1-102007 002 025
- JP-A- H10 144 392

## Beschreibung

Die Erfindung betrifft eine Vorrichtung zur Verriegelung eines Steckers in einer Steckdose nach dem Oberbegriff des Patentanspruchs 1.

Ferner betrifft die Erfindung ein Verfahren nach dem Oberbegriff des Patentanspruchs 11.

Ladesäulen zur Aufladung einer Fahrzeugbatterie eines elektrisch betreibbaren Fahrzeugs werden zunehmend an öffentlich zugänglichen Orten, beispielsweise in Einkaufszentren, auf Parkplätzen oder an der Arbeitsstelle bereitgestellt. Da die Aufladung der Fahrzeugbatterie eines elektrisch betreibbaren Fahrzeugs deutlich länger dauert als das Betanken eines mit fossilen Brennstoffen betriebenen Fahrzeugs, wird das elektrisch betreibbare Fahrzeug über einen längeren Zeitraum mittels eines Ladekabels mit der Ladestation verbunden. Beispielsweise wird das Fahrzeug während der Arbeitszeit oder über Nacht aufgeladen. Während dieser Zeitperiode ist das Fahrzeug in der Regel unbeaufsichtigt. Um einen störungsfreien Ladevorgang zu gewährleisten und Vandalismus bzw. dem Diebstahl des Ladekabels vorzubeugen, wird der Stecker des Ladekabels nach Einsetzen desselben in die Steckdose der Ladestation und/oder in das Fahrzeug verriegelt. Es ist bekannt, dies mittels eines elektrischen Kleinantriebs zu realisieren. Hierbei wird ein Verriegelungselement nach dem Einsetzen des Steckers in die Steckdose von einer Freigabeposition, in der der Stecker aus der Steckdose entnommen werden kann, in eine Verriegelungsposition verbracht, in der der Stecker in der Steckdose verriegelt ist und nicht entnommen werden kann. Nachteilig hierbei ist zunächst, dass ein Entriegeln des Steckers bei Abfall der elektrischen Versorgungsenergie (Primärenergie) nicht gewährleistet ist. Sofern die Energieversorgung der Ladesäule unterbrochen wird, kann der Stecker nicht entriegelt und demzufolge nicht aus der Ladesäule entnommen werden. Ein Abkoppeln des Fahrzeugs von der Ladesäule ist dann nicht möglich. Ferner kann mittels der bekannten Lösung nicht sichergestellt werden, dass nur ein korrekt in die Steckdose eingebrachter Stecker verriegelt wird, da andernfalls eine Beschädigung des Verriegelungselements und/oder des Steckers und/oder der Steckdose droht.

Aus der DE 101 02 242 A1 ist eine mittels einer Brennstoffzelle mit Energie versorgte Fahrzeuganordnung bekannt. Das mit der Brennstoffzelle verbundene Bordnetz sieht Steckeinrichtungen vor, bei denen ein Stecker formschlüssig in einer Steckdose festgelegt ist. Eine hierfür vorgesehene Verriegelungsvorrichtung sieht insbesondere ein mittels eines Elektromagneten längsverschiebbar gehaltenes Rastelement vor. Dem Rastelement ist eine bei der Verriegelung vorgespannte Zugfeder zugeordnet. Sie dient dazu, eine Notöffnung der Verriegelungsvorrichtung im Falle eines Abfalls der elektrischen Energieversorgung sicherzustellen.

Aufgabe der Erfindung ist es daher, eine Vorrichtung und ein Verfahren zur Verriegelung eines Steckers in einer Steckdose einer Ladesäule derart anzugeben, dass ein sicherer Betrieb der Ladesäule auch im Fehlerfall gewährleistet ist.

Zur Lösung dieser Aufgabe weist die Erfindung die Merkmale des Patentanspruchs 1 auf.

Der besondere Vorteil der Erfindung besteht darin, dass ein in einer Steckdose einer Ladesäule und/oder in einem elektrisch betreibbaren Fahrzeug verriegelter Stecker auch bei einem Abfall der primären Versorgungsenergie (Primärenergie) entriegelt und aus der Steckdose entnommen werden kann. Hierdurch kann das Fahrzeug auch bei einer Fehlfunktion der Ladesäule von derselben abgekoppelt und genutzt werden. Die Antriebseinheit wird zu diesem Zweck mittels einer in einem Hilfsenergiespeicher gespeicherten Hilfsenergie (Sekundärenergie) betätigt. Ein Speichervolumen des Hilfsenergiespeichers ist hierbei mindestens so groß bemessen, dass das Verriegelungselement einmalig von der Verriegelungsstellung in die Freigabestellung verbracht werden kann. Selbstverständlich ist es möglich, das Speichervolumen des Hilfsenergiespeichers größer zu bemessen.

Nach einer bevorzugten Ausführungsform der Erfindung ist die Sekundärenergie beim Verbringen des Verriegelungselements von der Freigabestellung in die Verriegelungsstellung auf den Hilfsenergiespeicher aufladbar. Durch das regelmäßige Aufladen des Hilfsenergiespeichers beim Verbringen des Verriegelungselements in die Verriegelungsstellung ist gewährleistet, dass sich der Hilfsenergiespeicher nicht über einen längeren Zeitraum unbemerkt entlädt oder ausfällt. Der Aufladevorgang kann hierbei derart ausgelegt sein, dass ein Verbringen des Verriegelungselements von der Freigabestellung in die Verriegelungsstellung ohne ein für wenigstens eine Betätigung des Verriegelungselements hinreichendes Aufladen des Hilfsenergiespeichers nicht möglich ist. Die Hilfsenergie kann mittels der Antriebseinheit oder mittels eines gesonderten Funktionsmoduls auf den Hilfsenergiespeicher aufgeladen werden.

Nach der Erfindung kann als Hilfsenergiespeicher ein Kondensator und/oder ein Akkumulator ausgebildet sein. Der Hilfsenergiespeicher stellt in Abhängigkeit vom Vorliegen eines Notbetriebssignals die elektrische Energie zur Betätigung des Verriegelungselements bereit. Vorteilhaft wird hierdurch elektrische Energie als Sekundärenergie zur Verfügung gestellt, so dass die Entriegelung des Verriegelungselements mittels der ohnehin bereitgestellten Antriebseinheit erfolgen kann. Diese Ausführungsform ist mechanisch besonders einfach und kostengünstig. Der Hilfsenergiespeicher kann hierbei so ausgelegt sein, dass ein zuverlässiger Notbetrieb zur Entriegelung des Verriegelungselements bei Abfall der Primärenergie über einen bestimmten Zeitraum, beispielsweise das Zeitintervall zwischen zwei Wartungen der Ladesäule, gewährleistet ist. Ebenso kann der Hilfsenergiespeicher eine Steuereinheit zur Überwachung des Notbetriebssignals (bzw. des Ausfalls eines Normalbetriebssignals) und/oder zum Betrieb des Stellmittels der Sekundärenergie mit Energie versorgen.

Nach einer Weiterbildung der Erfindung weist die Antriebseinheit ein mittels elektrischer Energie betätigbares Stellmittel auf. Vorteilhaft kann auf die Bereitstellung einer anderen als der für den Ladevorgang ohnehin benötigten elektrischen Energie verzichtet werden, wenn die Antriebseinheit ebenfalls mit elektrischer Energie betätigbar ist. Die Ladesäule kann hierdurch besonders kostengünstig ausgeführt werden. Das Stellmittel kann in diesem Fall beispielsweise ein elektrisch betätigbares Magnetventil, ein Linearmotor oder ein Elektromotor mit rotatorischer Abtriebsbewegung sein.

Nach einer Weiterbildung der Erfindung ist das Stellmittel der Antriebseinheit als ein in zwei Bewegungsrichtungen antreibbarer Elektromotor ausgebildet. Der Motor wird hierbei mittels der Primärenergie von der Freigabestellung in die Verriegelungsstellung verbracht. Die Rückführung des Verriegelungselements von der Verriegelungsstellung in die Freigabestellung erfolgt mittels der Primärenergie und/oder der in dem Hilfsenergiespeicher bereitgestellten Sekundärenergie. Vorteilhaft erfolgt das Ver- und Entriegeln des Steckers im Normalbetrieb elektromotorisch. Während eines Notbetriebs, das heißt bei Ausfall der Primärenergieversorgung, kann das Verriegelungselement mittels der in dem Hilfsenergiespeicher gespeicherten Sekundärenergie in die Freigabestellung zurückverbracht werden. Hierzu kann der Hilfsenergiespeicher beispielsweise durch einen Akkumulator/Kondensator gebildet sein. Besondere Vorteile ergeben sich, wenn die Antriebseinheit und/oder ein mechanischer Kontakt zwischen Verriegelungselement und Rastelement selbsthemmend ausgeführt ist. In diesem Fall kann der Elektromotor in der Freigabestellung und in der Verriegelungsstellung unbestromt bleiben, so dass sich eine besonders energieeffiziente Gesamtlösung realisieren lässt. Zur Positionierung des Verriegelungselements in die Verriegelungsstellung und/oder in die Freigabestellung können beispielsweise Anschläge angeordnet sein. Das Erreichen der Anschläge zur Positionierung des Verriegelungselements kann dann mittels entsprechender Positionssensoren oder über eine Erfassung einer charakteristischen Änderung von Betriebsparametern des Motors (insbesondere Drehzahl, Strom) detektiert werden. Ebenso ist es möglich, den Motor rein zeitgesteuert zu betreiben. Hierbei wird der Motor für eine vorgegebene Zeitperiode in eine Drehrichtung bestromt. Nach Ablauf der Zeitperiode wird angenommen, dass die Freigabestellung bzw. die Verriegelungsstellung eingenommen ist. Ferner ist ein Schrittmotor als Stellmittel einsetzbar.

Nach einer Weiterbildung der Erfindung ist der Motor der Antriebseinheit in der Verriegelungsstellung des Verriegelungselements dauerbestromt. Bei einer Unterbrechung der Primärenergieversorgung wird das Verriegelungselement mittels der in dem Hilfsenergiespeicher gespeicherten Sekundärenergie aus der Verriegelungsstellung in die Freigabestellung verbracht. Vorteilhafter Weise kann auf das Vorsehen eines reversierbaren, das heißt in zwei Drehrichtungen elektrisch betätigbaren Motors verzichtet werden. Während das Verriegelungselement elektromotorisch von der Freigabestellung in die Verriegelungsstellung verbracht wird, wird es mithilfe der in dem Hilfsenergiespeicher gespeicherten Sekundärenergie zurück in die Freigabestellung verbracht. Hierzu kann beispielsweise eine in der Verriegelungsstellung auf Druck vorgespannte mechanische Feder angeordnet sein, die das Verriegelungselement bei Abfall der Primärenergie in die Freigabestellung zurückbringt. Der Hilfsenergiespeicher ist dann nicht allein als Lösung für den Notbetrieb vorgesehen. Vielmehr dient er bei jedem Betätigungszyklus auch im Normalbetrieb zur Zurückverbringung des Verriegelungselements in die Freigabestellung. Der Hilfsenergiespeicher kann hierbei mit dem Motor zusammenwirken. Indem der Hilfsenergiespeicher auch im Normalbetrieb verwendet wird zur Rückstellung des Verriegelungselements wird der Hilfsenergiespeicher regelmäßig betätigt und die Funktionsfähigkeit des Hilfsenergiespeichers regelmäßig überprüft. Zur Anordnung von Anschlägen und Detektion der Endlagen gilt das oben gesagte in analoger Weise.

Nach einer Weiterbildung der Erfindung ist das Verriegelungselement als ein Steuernocken mit einer Steuerkontur ausgebildet. Vorteilhaft kann die Steuerkontur am Umfang des Steuernockens angeordnet sein. Der Steuernocken kann hierbei mittels eines Elektromotors mit rotatorischen Abtrieb betätigt werden. Beispielhaft kann der Steuernocken direkt mit dem Motor verbunden sein. Hierbei ergibt sich vorteilhaft eine besonders schnelle Betätigung des Verriegelungselements, da der Motor weniger als eine Motorumdrehung drehen muss zur Verbringung des Verriegelungselements von der Freigabestellung in die Verriegelungsstellung und/oder zurück. Beispielhaft kann zwischen dem Motor und dem Steuernocken ein mechanischer Wandler (Getriebe) angeordnet sein. Hierdurch kann erreicht werden, dass der Motor bei der Verbringung des Verriegelungselements von der Freigabestellung in die Verriegelungsstellung und/oder zurück um mehr als eine Umdrehung dreht. Die Kraft bzw. das Drehmoment des Motors wird hierdurch erhöht. Unabhängig davon, ob zwischen Motor und Steuernocken ein Getriebe angeordnet ist, kann eine selbsthemmende Blockierung des Verriegelungsnockens realisiert werden, so dass auf eine Dauerbestromung des Elektromotors in der Freigabestellung bzw. in der Verriegelungsstellung verzichtet werden kann.

Nach einer Weiterbildung der Erfindung ist der Hilfsenergiespeicher als ein auf einer Motorwelle des Motors angeordnetes Federelement ausgebildet. Vorteilhaft ist hierdurch die zu speichernde Hilfsenergie zur Rückverbringung des Verriegelungselements von der Verriegelungsstellung in die Freigabestellung besonders gering. Der Hilfsenergiespeicher kann demzufolge ein geringes Speichervolumen haben.

Nach einer Weiterbildung der Erfindung ist die Steuerkontur des Steuernockens derart ausgeformt, dass ein erster Abschnitt der Steuerkontur in der Freigabestellung und ein zweiter Steuerkonturabschnitt an einem zweiten Anschlag und/oder an einem Sensor anliegt. Vorteilhaft können die Freigabestellung und die Verriegelungsstellung hierdurch in besonders einfacher Weise exakt angefahren werden. Das Erreichen der Anschläge kann wie bereits gezeigt mittels geeigneter Sensoren und/oder mittels der Überwachung der Motorbetriebsparameter detektiert werden. Ebenso ist es möglich, den Motor für eine vorgegebene Zeit in eine definierte Drehrichtung zu bestromen und auf Endlagensignale zu verzichten.

Nach einer Weiterbildung der Erfindung ist die Steuerkontur derart ausgeformt, dass ein Blockierabschnitt der Steuerkontur die Bewegung des Verriegelungselements von der Freigabestellung in die Verriegelungsstellung blockiert, sofern das Rastelement nicht in die Ausnehmung des Steckers eingreift und sich nicht in der Raststellung befindet. Vorteilhafterweise kann hierdurch in besonders einfacher Weise die Verbringung des Verriegelungselements in die Verriegelungsstellung unterbunden werden, sofern der Stecker nicht vollständig in die Steckdose eingeführt ist. Einer Beschädigung des Steckers, der Steckdose bzw. sonstiger Komponenten der Ladesäule ist hierdurch in ebenso einfacher wie kostengünstiger Weise vorgebeugt. Abhängig von den kinematischen Randbedingungen im Zusammenwirken von Rastelement und Verriegelungselement kann der Blockierabschnitt stetig oder unstetig ausgeführt sein. Indem der Beginn des Ladevorgangs an die Verriegelung des Steckers in der Steckdose gekoppelt ist, wird der Betrieb der Vorrichtung besonders sicher und ein guter Schutz gegen Missbrauch realisiert.

Nach einer Weiterbildung der Erfindung ist dem Rastelement und/oder dem Verriegelungselement wenigstens eine Endlagenbestimmungseinheit zur Erzeugung eines Endlagensignals derart zugeordnet, dass mittels des Endlagensignals die Raststellung des Rastelements und/oder die Verriegelungsstellung des Verriegelungselements detektierbar sind. Vorteilhaft wird das Endlagensignal allein dann erzeugt, wenn das Rastelement in der Raststellung befindlich ist und/oder das Verriegelungselement die Verriegelungsstellung einnimmt. Aus dem Ausbleiben des Endlagensignals kann hierbei auf eine Fehlersituation geschlossen werden, die durch einen unkorrekten Sitz des Steckers oder einem Defekt des Verriegelungsmechanismus zurückzuführen ist. In beiden Fällen darf der Ladevorgang nicht gestartet werden, da die Sicherheit nicht gewährleistet werden kann. Als Rastelement kann beispielsweise ein mit einer Federkraft beaufschlagter, um einen Drehpunkt desselben gelagerter und durch die Federkraft in der Raststellung verbrachter Hebel dienen. Beispielsweise kann als Rastelement ein linear oder entlang einer Steuerkurve verschiebbarer, freigängiger und nicht federbelasteter Hebel, Zapfen oder dergleichen verwendet werden, dessen freies Ende zur Festlegung des Steckers in eine Ausnehmung des Steckers eingreift. Ein Einrasten im Sinne einer Schnapp- oder Clipsverbindung ist hierbei nicht erforderlich.

Nach einer Weiterbildung der Erfindung weist die Endlagenbestimmungseinheit einen mittels des Rastelements und/oder des Verriegelungselements betätigbaren Sensor auf. Vorteilhaft kann durch das Vorsehen des Sensors, beispielsweise eines Mikroschalters, eines Reed-Kontakts oder eines Hall-Elements, die Endlage des zugeordneten Rast- bzw. Verriegelungselements zuverlässig erfasst werden. Die Endlage kann hierbei mittelbar (z. B. über den mit dem Verriegelungselement zusammenwirkende Mikroschalter) oder unmittelbar (z. B. über den am Motor vorgesehenen Hall-Sensor) detektiert werden. Die Sensoren sind sehr kostengünstig.

Nach einer Weiterbildung der Erfindung ist der Blockierabschnitt des Verriegelungselements derart geformt, dass das Verriegelungselement nur dann in die Verriegelungsstellung verbringbar ist, wenn das Rastelement in der Raststellung angeordnet ist. Vorteilhaft wird die Stellbewegung des Verriegelungselements blockiert, wenn der Stecker nicht vollständig oder verkantet in die Steckdose eingesetzt ist. Durch die Blockade des Verriegelungselements erreicht dieses nicht die Verriegelungsstellung, so dass das Erreichen derselben mittels der Endlagenbestimmungseinheit nicht detektiert wird und auf die unkorrekte Positionierung des Steckers in der Steckdose zurückgeschlossen werden kann.

Nach einer Weiterbildung der Erfindung ist die Steuerkontur des Steuernockens derart geformt, dass ein erster Steuerkonturabschnitt in der Freigabestellung an einem ersten Anschlag und zweiter Steuerkonturabschnitt in einer Verriegelungsstellung an einem zweiten Anschlag und/oder dem Sensor der Endlagenbestimmungseinheit anliegt. Ferner stützt sich der Blockierabschnitt des Verriegelungselements bei nicht korrekter Positionierung des Rastelements in der Raststellung an dem Rastelement selbst ab und blockiert auf diese Weise die Verbringung des Verriegelungselements von der Freigabestellung in die Verriegelungsstellung. In vorteilhafter Weise können die Freigabestellung und die Verriegelungsstellung durch das Vorsehen von Anschlägen und die Ausgestaltung des ersten und zweiten Steuerkonturabschnitts besonders exakt angefahren werden. Das Erreichen der Anschläge kann mittels geeigneter Sensoren und/oder mittels einer Überwachung von Betriebsparametern des Motors detektiert werden. Ebenso ist es möglich, den Motor für eine vorgegebene Zeit in eine definierte Drehrichtung zu bestromen und auf Endlagensignale zu verzichten. Indem der Blockierabschnitt des Verriegelungselements an dem Rastelement selbst abgestützt ist, ist eine direkte Rückkopplung in Bezug auf die Position des Rastelements gewährleistet. Die Drehbewegung des Verriegelungselements wird mechanisch blockiert und damit sicher und zuverlässig unterbunden, sofern das Rastelement nicht in der Raststellung positioniert ist.

Zur Lösung der Aufgabe weist die Erfindung die Merkmale des Patentanspruchs 11 auf.

Der besondere Vorteil der Erfindung besteht darin, dass bei einem Abfall der Primärenergie ein Notbetrieb der Ladesäule in der Form gewährleistet ist, dass der Stecker mittels der Hilfsenergie entriegelt wird. Ein Benutzer kann sein Fahrzeug somit auch bei einem Ausfall der Primärversorgung von der Ladesäule abkoppeln.

Nach der Erfindung wird mittels der in dem Hilfsenergiespeicher gespeicherten Hilfsenergie bei einem Abfall der primären Energieversorgung wenigstens eine weitere Notfallfunktion der Ladesäule mit Energie versorgt. Der Hilfsenergiespeicher ist hierbei als ein Akkumulator/Kondensator zur Speicherung elektrischer Energie ausgebildet. Vorteilhaft können durch die Verwendung des Hilfsenergiespeichers für mehr als eine Notfallfunktion der Ladesäule (beispielsweise Entriegelung des Steckers und Speichern der aktuellen Verbrauchsdaten) die Kosten gesenkt und eine verbesserte Notbetriebseigenschaft der Ladesäule realisiert werden.

Nach einer Weiterbildung der Erfindung wird ein bei Erreichen der Verriegelungsstellung mittels der Endlagenbestimmungseinrichtung bestimmbares Endlagensignal einer Steuereinheit zugeführt zur Ausschaltung und/oder Bremsung des Motors und/oder zur Freigabe eines Ladevorgangs des Fahrzeugs. Vorteilhaft wird hierdurch das korrekte Einbringen des Steckers in die Steckdose und/oder die Verriegelung des Steckers in der Steckdose überwacht. Der Ladevorgang kann demzufolge ausgesetzt werden, wenn die vorgenannten Kriterien nicht erfüllt sind und demzufolge kein Endlagensignal anliegt. Hierdurch wird der Betrieb der Ladesäule besonders sicher und einer Manipulation vorgebeugt.

Nach einer Weiterbildung der Erfindung wird die Verbringung des Verriegelungselements von der Freigabestellung in die Verriegelungsstellung durch das Rastelement blockiert, sofern das Rastelement nicht in der Raststellung positioniert ist. Vorteilhaft wird hierdurch eine mechanisch wirkende, zuverlässige Sicherung realisiert, über die sichergestellt werden kann, dass der Ladevorgang nur bei korrekt in die Steckdose eingesteckten Stecker und korrekter Verriegelung des Rastelements gestartet wird.

Nach einer Weiterbildung der Erfindung wird mittels einer Steuereinheit aus dem Ausbleiben des Endlagensignals auf den nicht korrekten Sitz des Steckers in der Steckdose geschlossen. Vorteilhaft kann beispielsweise bei einer zeitgesteuerten Bestromung eines Stellmittels der Antriebseinheit zur Verbringung des Verriegelungselements in die Verriegelungsstellung der nicht korrekte Sitz des Steckers in der Steckdose in besonders einfacher, kostengünstiger und zuverlässiger Weise ermittelt werden. Hierdurch wird ein sicherer Betrieb der Ladesäule gewährleistet, da der Ladevorgang bei nicht korrekt eingesetztem Stecker nicht gestartet bzw. unterbrochen wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Darstellung einer erfindungsgemäßen Vorrichtung mit einer Steckdose und einem Verriegelungselement in einer Freigabestellung,
- Figur 2: eine perspektivische Darstellung der erfindungsgemäßen Vorrichtung gemäß Figur 1 mit einem eingesteckten Stecker in einer Verriegelungsposition,
- Figur 3: die Vorrichtung in der Freigabestellung im Schnitt A-A gemäß Figur 2,
- Figur 4: die Vorrichtung im Schnitt B-B gemäß Figur 3,
- Figur 5: die Vorrichtung in der Verriegelungsposition im Schnitt A-A gemäß Figur 2,
- Figur 6: die Vorrichtung im Schnitt C-C gemäß Figur 5,
- Figur 7: die Vorrichtung in einer Blockierstellung im Schnitt A-A gemäß Figur 2 und
- Figur 8: die Vorrichtung gemäß Figur 7 im Schnitt D-D.

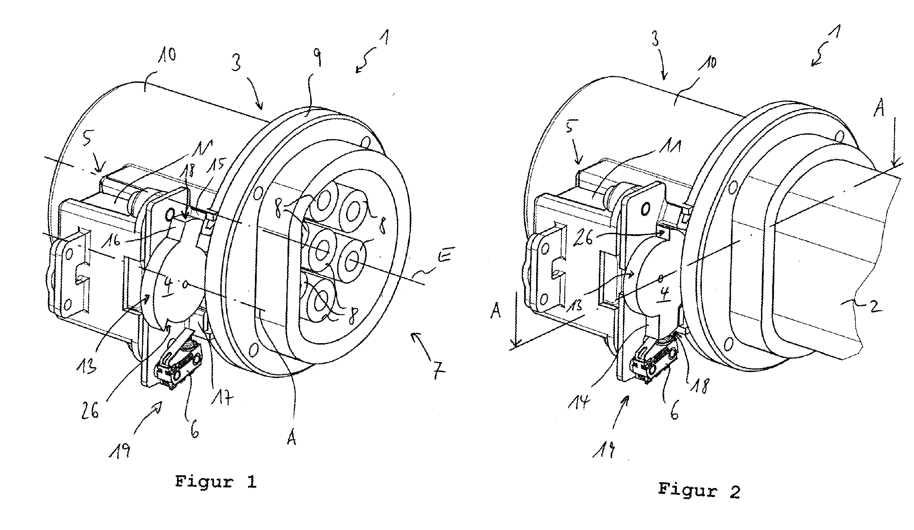

Eine Vorrichtung 1 zur Verriegelung eines Steckers 2 in einer Steckdose 3 gemäß der Figuren 1 und 2 weist als zentrale Funktionselemente/Baugruppen die Steckdose 3, ein Verriegelungselement 4, eine Antriebseinheit 5 zur Betätigung des Verriegelungselements 4 und einen Sensor 6 zur Detektion mindestens einer Stellung des Verriegelungselements 4 auf. Die Vorrichtung 1 wird beispielsweise in einer Ladesäule integriert angeordnet, wobei mittels der Ladesäule elektrische Energie für elektrisch betreibbare Fahrzeuge bereitstellbar ist. Ebenso kann die Vorrichtung 1 in dem mittels elektrischer Energie betreibbaren Fahrzeug integriert angeordnet sein. Das Fahrzeug und die Ladesäule werden für den Ladevorgang über ein Ladekabel miteinander verbunden, welches vorzugsweise beidseits den Stecker 2 aufweist. Als Fahrzeug im Sinne der Erfindung gelten insbesondere Automobile, Zweiräder, Wasserfahrzeuge (Boote), Anhänger (z. B. Wohnanhänger, Verkaufsanhänger), Wohnmobile und Luftfahrzeuge.

Die Steckdose 3 weist auf einer stirnseitig angeordneten Kupplungsseite 7 eine Anzahl an Konnektierungselementen 8 zur elektrisch leitenden Verbindung der Steckdose 3 mit dem Stecker 2 auf. In einem der Kupplungsseite 7 der Steckdose 3 zugewandten Randabschnitt weist die Steckdose 3 einen radial von derselben abragenden Kragen 9 auf. Auf einer dem Kupplungsseite 7 abgewandten Seite des Kragens 9 ist die Antriebseinheit 5 angeordnet. Die Antriebseinheit 5 ist mit einer Mantelfläche 10 der Steckdose 3 verbunden.

Als ein Stellmittel 11 weist die Antriebseinheit 5 einen Elektromotor mit rotierendem Abtrieb auf. Eine Antriebsachse A des Elektromotors 11 ist hierbei parallel zu einer Längserstreckungsrichtung E der Steckdose 3 orientiert. Koaxial zur Antriebsachse A des Elektromotors 11 ist das Verriegelungselement 4 angeordnet. Das Verriegelungselement 4 ist über eine Motorwelle 12 drehfest mit dem Elektromotor 11 verbunden und zwischen dem Kragen 9 der Steckdose 3 und der Antriebseinheit 5 angeordnet. Das Verriegelungselement 4 ist als ein Steuernocken 4 ausgebildet, der entlang seines Umfangs seine Steuerkontur 13 aufweist. Der Steuernocken 4 bildet ein flaches Scheibenelement, welches sich in einer Wirkebene W erstreckt Die Wirkebene W ist senkrecht zu der Antriebsachse A des Elektromotors 11 orientiert angeordnet. In einer ersten Drehstellung (Freigabestellung) des Steuernockens 4 gemäß Figur 1 liegt derselbe mit einem ersten Steuerkonturabschnitt 14 an einem ersten Anschlag 15 an. In einer zweiten Drehstellung (Verriegelungsstellung) des Steuernockens 4 gemäß Figur 2 liegt derselbe mit einem zweiten Steuerkonturabschnitt 16 an einem zweiten Anschlag 17 an. Der erste Anschlag 15 und der zweite Anschlag 17 sind hierbei an die Steckdose 3 angeformt.

In der Verriegelungsstellung wird der Sensor 6 mit einem Betätigungsabschnitt 18 der Steuerkontur 13 betätigt. Der Sensor 6 ist hierbei als ein Mikroschalter ausgeführt. Der Mikroschalter 6 bildet zusammen mit dem Betätigungsabschnitt 18 und einer nicht dargestellten Steuereinheit zur Erfassung und Verarbeitung eines Signals des Mikroschalters 6 eine Endlagenbestimmungseinheit 19. Das Signal des Mikroschalters 6 dient hierbei als ein Endlagensignal zur Detektion der Verriegelungsstellung des Steuernockens 4.

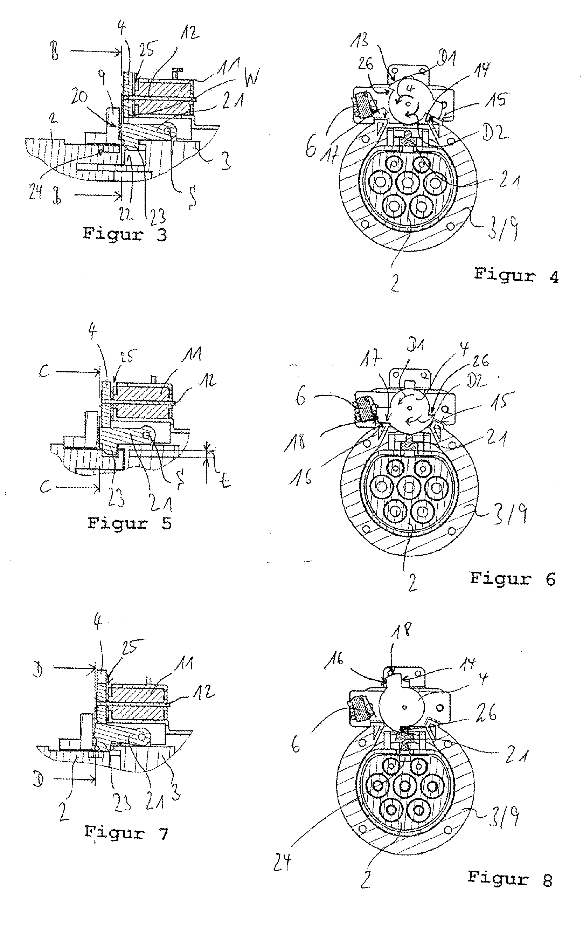

Wie in den Figuren 3 und 4 gezeigt, kann in der Freigabestellung des Steuernockens 4 der Stecker 2 in die Steckdose 3 eingesteckt. Hierzu ist die Steuerkontur 13 des Steuernockens 4 derart geformt, dass der Steuernocken 4 radial beabstandet zu einem freien Ende 20 eines um eine Schwenkachse S drehbar an der Steckdose 3 gehaltenen Rastelements 21 angeordnet ist. Das Rastelement 21 gleitet beim Einführen des Steckers 2 in die Steckdose 3 entlang einer Führungsschräge 22 entlang des Steckers 2. Das Rastelement 21 wird hierbei aus einer Raststellung derselben im Uhrzeigersinn um die Schwenkachse S gedreht, so dass das freie Ende 20 mit einer Nase 23 in Richtung des Steuernockens 4 angehoben wird. Wird der Stecker 2 weiter in Steckdose 3 eingeführt, schnappt die Nase 23 des Rastelements 21 in eine Ausnehmung 24 des Steckers 2. Hierbei nimmt das Rastelement 21 seine Raststellung ein. Üblicherweise erfolgt die Drehung des Rastelements 21 im Uhrzeigersinn gegen eine nicht dargestellte Torsionsfeder, über welche das Rastelement 21 in der dargestellten Raststellung gehalten bzw. in dieselbe zurückverbracht wird, sofern der Stecker 2 entweder nicht oder vollständig in die Steckdose 3 eingesetzt ist.

Zur Verbringung des Steuernockens 4 von der Freigabestellung in die Verriegelungsstellung wird der Motor 11 in eine erste Drehrichtung D1 (Gegenuhrzeigersinn) gedreht. Bei der Rückstellung des Steuernockens 4 von der Verriegelungsstellung in die Freigabestellung wird der Motor 11 entgegengesetzt in eine zweite Drehrichtung D2 (Uhrzeigersinn) gedreht. Sofern das Rastelement 21 in der Raststellung angeordnet ist, kann der Steuernocken 4 aus der Freigabestellung, in der der erste Steuerkonturabschnitt 14 desselben an dem ersten Anschlag 15 anliegt, in die Verriegelungsstellung verbracht werden. In der Verriegelungsstellung liegt der zweite Steuerkonturabschnitt 16 an dem zweiten Anschlag 17 an. Gemäß der Figuren 5 und 6 ist die Steuerkontur 13 des Steuernockens 4 derart ausgebildet, dass der Steuernocken 4 unmittelbar an dem freien Ende 20 des Rastelements 21 anliegt. Allenfalls kann zwischen dem Verriegelungselement 4 und dem freien Ende 20 des Rastelements 21 ein schmaler Spalt gebildet sein, dessen Spalthöhe geringer ist als eine Ausnehmungstiefe t der Ausnehmung 24. Hierdurch wird sichergestellt, dass das Rastelement 21 in der Verriegelungsstellung nicht im Uhrzeigersinn gedreht und die Nase 23 nicht aus der Ausnehmung 24 gehoben werden kann. Der Stecker 2 ist somit in der Steckdose 3 verriegelt angeordnet. Um die Verriegelungsstellung sicher zu detektieren, wird in derselben der Mikroschalter 6 mittels des Betätigungsabschnitts 18 und der Steuerkontur 13 betätigt.

Auf der Motorwelle 12 ist zwischen dem Elektromotor 11 und dem Steuernocken 4 als ein Hilfsenergiespeicher 25 eine Torsionsfeder angeordnet. Die Torsionsfeder 25 wird bei der Verbringung des Verriegelungselements 4 von der Freigabestellung in die Verriegelungsstellung auf Druck vorgespannt. Die in der Torsionsfeder 25 gespeicherte Energie (Hilfsenergie, Sekundärenergie) ist derart bemessen, dass der Steuernocken 4 mittels der Sekundärenergie aus der Verriegelungsstellung in die Freigabestellung zurückverbracht werden kann.

In der Verriegelungsstellung ist der Elektromotor 11 dauerbestromt, so dass der Elektromotor 11 den Steuernocken 4 gegen die Torsionsfeder 25 in der Verriegelungsstellung fällt. Bei einem Ausfall der Versorgungsenergie (Primärenergie) des Elektromotors 11 wird das Verriegelungselement 4 mittels der in dem Hilfsenergiespeicher 25 gespeicherten Sekundärenergie in die Freigabestellung zurückverbracht. Zu einem derartigen Ausfall der Primärenergieversorgung kommt es beispielsweise bei einem Stromausfall oder einem anderen Defekt der Ladesäule. Darüber hinaus wird der Dauerstrom des Motors mittels eines nicht dargestellten Motorsteuergeräts immer dann abgestellt, wenn der Steuernocken 4 in die Freigabestellung zurückverbracht werden soll. Der Elektromotor 11 dreht daher allein in die erste Drehrichtung D1. Die Drehung des Steuernockens 4 in die zweite Drehrichtung D2 erfolgt auch im Normalbetrieb mittels der in dem Hilfsenergiespeicher 25 gespeicherten Sekundärenergie. Durch den Verzicht auf den Betrieb des Elektromotors 11 in zwei Drehrichtungen können insbesondere ansteuerseitig Kosten gespart werden.

In einer Zwischenstellung (Blockadestellung) des Steuernockens 4 gemäß der Figuren 7 und 8 ist der Stecker 2 nicht vollständig in die Steckdose 3 eingeführt. Das Rastelement 21 ist aus der Raststellung im Uhrzeigersinn herausgedreht. Die Nase 23 des Rastelements 21 greift hierbei nicht bzw. nicht vollständig in die Ausnehmung 24 des Steckers 2. Der Steuernocken 4 kann nicht aus der Freigabestellung in die Verriegelungsstellung verdreht werden. Vielmehr liegt ein als ein dritter Steuerkonturabschnitt ausgebildeter Blockierabschnitt 26 der Steuerkontur 13 derart an dem freien Ende 20 des Rastelements 21 an, dass die Drehbewegung des Steuernockens 4 im Gegenuhrzeigersinn blockiert ist. Der Blockierabschnitt 26 ist hierbei als ein unstetiger Blockerabschnitt 26 ausgebildet, dass heißt die Steuerkontur 13 weist in Radialrichtung - wie vorliegend - einen Sprung oder eine andere Unstetigkeitsstelle auf. Das Verriegelungselement 4 kann nicht in die Verriegelungsstellung gedreht werden. Der Mikroschalter 6 wird mittels des Betätigungsabschnitts 18 der Steuerkontur 13 nicht geschaltet. Von der Steuereinheit der Endlagenbestimmungseinheit 19 wird aufgrund des fehlenden Endlagensignals erkannt, dass das Rastelement 21 sich nicht in der Raststellung befindet und dass das Verriegelungselement 4 sich nicht in der Verriegelungsstellung befindet. Aufgrund des fehlenden Endlagensignals wird der Elektromotor 11 abgeschaltet. Mit der Aufladung des Fahrzeugs wird trotz möglicherweise bereits erfolgter elektrischer Konnektierung von Stecker 2 und Steckdose 3 aufgrund der fehlenden mechanischen Festlegung des Steckers 2 in der Steckdose 3 nicht begonnen.

Zur Verbringung des Steuernockens 4 aus der Freigabestellung in die Verriegelungsstellung wird der Elektromotor 11 zunächst derart bestromt, dass der Steuernocken 4 in der ersten Drehrichtung D1 betätigt wird. Hierbei hebt sich der erste Steuerkonturabschnitt 14 der Steuerkontur 13 von dem ersten Anschlag 15 ab. Die Drehung des Steuernockens 4 wird fortgesetzt, bis in der Verriegelungsstellung der zweite Steuerkonturabschnitt 16 der Steuerkontur 13 an dem zweiten Anschlag 17 anliegt und mittels des Betätigungsabschnitts 18 der Mikroschalter 6 betätigt wird. Das Rastelement 21, dessen Nase 23 in die Ausnehmung 24 des Steckers 2 eingreift, befindet sich bei der Drehung des Steuernockens 4 in die Verriegelungsstellung in der Raststellung. Der Steuernocken 4 ist in der Verriegelungsstellung derart oberhalb des freien Endes 20 des Rastelements 21 angeordnet, dass das Rastelement 21 nicht im Uhrzeigersinn um die Schwenkachse S gedreht und die Nase 23 nicht in Richtung des Steuernockens 4 aus der Ausnehmung 24 des Steckers 2 angehoben werden kann. Der Stecker 2 ist in der Verriegelungsstellung durch das Rastelement 21 mechanisch in der Steckdose 3 festgelegt. Zugleich ist das Rastelement 21 mittels des Verriegelungselements 4 in seiner Raststellung fixiert.

Beim Verbringen des Steuernockens 4 aus der Freigabestellung in die Verriegelungsstellung wird zugleich die zwischen dem Steuernocken 4 und dem Elektromotor 11 angeordnete Torsionsfeder 25 vorgespannt. In der Verriegelungsstellung wird der Elektromotor 11 dauerbestromt, so dass das Verriegelungselement 4 mittels des Elektromotors 11 gegen die Torsionsfeder 25, den Steuernocken 4 in der Verriegelungsstellung hält.

In der Verriegelungsstellung des Steuernockens 4 wird der Elektromotor 11 mittels der ihm zugeordneten Steuereinheit dauerbestromt. Zur Freigabe des Steckers 2 bzw. bei einem Abfall der Primärenergieversorgung wird der Dauerstrom des Motors 11 unterbrochen. Der Steuernocken 4 wird mittels der in dem Hilfsenergiespeicher 25 gespeicherten Hilfsenergie (Sekundärenergie) aus der Verriegelungsstellung zurück in die Freigabestellung verbracht. Der Hilfsenergiespeicher 25 wird hierbei zumindest teilweise entladen. In der Freigabestellung kann der Stecker 2 manuell aus der Steckdose 3 entnommen werden. Hierzu kann an der Nase 23 bzw. der Ausnehmung 24 eine weitere, nicht dargestellte Führungsschräge oder eine andere geeignete Leitfläche ausgebildet sein.

Ist der Stecker 2 nicht vollständig oder verkantet in die Steckdose 3 eingesteckt worden, greift das Rastelement 21 mit seiner Nase 23 nicht oder nicht vollständig in die Ausnehmung 24 des Steckers 2 ein. Das Rastelement 21 wird hierdurch nicht in seiner Raststellung positioniert. Beim Verbringen des Steuernockens 4 aus der Freigabestellung in die Verriegelungsstellung schlägt der Blockierabschnitt 26 der Steuerkontur 13 gegen das freie Ende 20 des Rastelements 21. Das Rastelement 21 blockiert hierbei die weitere Drehbewegung des Steuernockens 4. Da das Verriegelungselement 4 nicht bis zur Verriegelungsstellung gedreht wird, wird der Mikroschalter 6 mittels des Betätigungsabschnitts 18 nicht betätigt. Es wird folglich kein Endlagensignal erzeugt und an die Steuereinheit der Endlagenbestimmungseinheit 19 weitergeleitet. Aus dem Fehlen des Endlagensignals wird auf die fehlende mechanische Festlegung des Steckers 2 in der Steckdose 3 geschlossen. Die als Hilfsenergiespeicher 25 wirkende Torsionsfeder ist in dieser Zwischenstellung des Steuernockens 4 anteilig mit Sekundärenergie geladen worden. Die in dem Hilfsenergiespeicher 25 bereitgestellte Sekundärenergie ist jedoch ausreichend, um den Steuernocken 4 bei einem Abfall des Motorstroms in die Freigabestellung zurückzuverbringen.

Nach einer alternativen, nicht dargestellten Ausführungsform der Erfindung kann als Stellmittel 11 beispielsweise ein Elektromagnet angeordnet sein. Dem Elektromagnet 11 kann ein durch ihn betätigtes Verriegelungselement 4 zur Verriegelung des Rastelements 21 zugeordnet sein. Ebenso ist es möglich, dass der Elektromagnet 11 selbst als Verriegelungselement 4 dient und das Rastelement 21 verriegelt bzw. freigibt.

Gleiche Bauteile und Bauteilfunktionen sind durch gleiche Bezugszeichen gekennzeichnet.

Nach einer alternativen, nicht dargestellten Ausführungsform der Erfindung kann auf die Anordnung von Anschlägen 15, 17 verzichtet werden. Dem Verriegelungselement 4 können ein oder mehr Sensoren 6 derart zugeordnet werden, dass mittels der Sensorsignale auf die Positionierung des Verriegelungselements 4 in der Freigabestellung und/oder in der Verriegelungsstellung und/oder in der Zwischenstellung geschlossen werden kann. Der Elektromotor 11 kann hierzu wahlweise in eine oder in zwei Drehrichtungen betätigt werden. Wird der Elektromotor 11 allein in eine Drehrichtung betätigt, ist der Hilfsenergiespeicher 25 vorzugsweise als ein Kondensator und/oder Akkumulator zur Speicherung elektrischer Sekundärenergie ausgebildet. Das Verriegelungselement 4 und/oder das Rastelement 21 können hierbei derart ausgebildet sein, dass zwischen denselben in der Freigabestellung und/oder in der Verriegelungsstellung helbsthemmung auftritt. Der Elektromotor 11 muss dann zur Positionierung des Verriegelungselements 4 in der Freigabestellung und/oder der Verriegelungsstellung nicht dauerbestromt werden.

Als Sensor 6 können eine Vielzahl unterschiedlicher Sensoren, beispielsweise ein Reed-Kontakt, ein Hall-Sensor oder ein optischer Sensor Verwendung finden. Der Sensor 6 kann dem Rastelement 21 und/oder dem Verriegelungselement 4 und/oder beiden zugeordnet sein. Beispielsweise kann mittels eines optischen Sensors detektiert werden, ob das Rastelement 21 in der Raststellung und zugleich das Verriegelungselement 4 in der Verriegelungsstellung positioniert sind.

Nach einer alternativen Ausführungsform der Erfindung kann die Endlagenbestimmungseinheit 19 sensorlos ausgeführt werden. In diesem Fall kann das Endlagensignal beispielsweise mittels sogenannten Ripple Counting ermittelt werden. Hierbei können auf Basis von Betriebsparametern eines Gleichstrommotors 11 (insbesondere Motorstrom und Motorspannung) die Drehzahl und die Position des Gleichstrommotors 11 sensorlos erfasst und gesteuert werden.

Nach einer alternativen Ausführungsform der Erfindung kann auf die Anordnung des Hilfsenergiespeichers 25 verzichtet werden. Hierbei wird eine Vorrichtung 1 mit einer Endlagenbestimmungseinheit 19 realisiert, die im Falle eines Abfalls der primären Versorgungsenergie nicht mittels des Hilfsenergiespeichers 25 entriegelt zur Freigabe des Steckers 2 in der Steckdose 3. Eine derartige Vorrichtung 1 kann beispielsweise in dem Fahrzeug angeordnet sein. Ein Ausfall der Primärenergie kommt hier einem vollständig entladenen Fahrzeugspeicher gleich. Bei vollständig entladenem Fahrzeugspeicher kann das Fahrzeug nicht mehr betrieben werden, so dass auf die Entriegelung des Steckers 2 in der Steckdose 3 verzichtet werden kann. Mit Ausnahme des nicht angeordneten Hilfsenergiespeichers 25 kann die Vorrichtung 1 ansonsten baugleich zu der dargestellten Ausführungsform der Erfindung realisiert sein. Durch den Einsatz der im Wesentlichen gleichen Vorrichtung 1 in der Ladesäule und dem Fahrzeug ergeben sich Kostenvorteile und Vorteile hinsichtlich der Beschaffung und Logistik der Bauteile.

Nach einer alternativen Ausführungsform der Erfindung kann auf die Anordnung der Endlagenbestimmungseinheit 19 verzichtet werden.

Die Steuereinheit des Stellmittels 11 und/oder die Steuereinheit der Endlagenbestimmungseinheit 19 können als separate Baugruppen, als separate Funktionsmodule in einer gemeinsamen Baugruppe oder funktional bzw. räumlich integriert ausgeführt sein. Sie können hierbei ferner Bestandteil weiterer Steuerkomponenten der Ladesäule bzw. des Fahrzeugs sein.

Es versteht sich, dass die Steckdose 3 der Ladesäule auch als Stecker und der Stecker 2 des Ladekabels als Steckdose ausgebildet sein können. Mithin bilden Steckdose 3 und Stecker 2 jeweils ein Steckelement einer Steckeinrichtung zur elektrischen Verbindung. Die Ladesäule kann als eine Ladestation ausgebildet sein. Die Ladestation kann räumlich verteilt angeordnet sein, beispielsweise kann kann die Steckdose 3 räumlich getrennt von der Steuereinheit vorgesehen werden. Auf eine säulenförmige Geometrie eines Gehäuses der Ladestation kommt es nicht an.

## Patentansprüche

1. Vorrichtung zur Verriegelung eines Steckers (2) in einer Steckdose (3), die in einer Ladesäule oder in einem mittels elektrischer Energie betreibbaren Fahrzeug integriert angeordnet ist, wobei mittels der Ladesäule elektrische Energie für das elektrisch betreibbare Fahrzeug bereitstellbar ist, mit einem beweglich gelagerten Rastelement (21), das in einer Raststellung desselben in eine Ausnehmung (24) des Steckers (2) eingreift zur Verbindung desselben mit der Steckdose (3), und mit einem dem Rastelement (21) zugeordneten Verriegelungselement (4), welches mittels einer Antriebseinheit (5) betätigbar ist, wobei das Rastelement (21) in einer Verriegelungsstellung des Verriegelungselements (4) in der Ausnehmung (24) des Steckers (2) verriegelbar ist, wobei das Rastelement (21) in einer Freigabestellung des Verriegelungselements (4) freigebbar ist zur Entnahme des Steckers (2), und wobei der Antriebseinheit (5) ein Hilfsenergiespeicher (25) zugeordnet ist und dass ein Speichervolumen des Hilfsenergiespeichers (25) derart bemessen ist, dass das Verriegelungselement (4) mittels der in dem Hilfsenergiespeicher (25) bereitstellbaren Energie (Sekundärenergie) wenigstens einmal von der Verriegelungsstellung in die Freigabestellung verbringbar ist, **dadurch gekennzeichnet, dass** als Hilfsenergiespeicher (25) ein Kondensator und/oder ein Akkumulator ausgebildet ist, der in Abhängigkeit vom Auftreten eines Notbetriebssignals die elektrische Energie zur Betätigung des Verriegelungselements (4) liefert.

2. Vorrichtung nach Anspruch 1, **dadurch gekennzeichnet, dass** die Sekundärenergie beim Verbringen des Verriegelungselements (4) von der Freigabestellung in die Verriegelungsstellung auf den Hilfsenergiespeicher (25) aufladbar ist.

3. Vorrichtung nach Anspruch 1 oder 2, **dadurch gekennzeichnet, dass** die Antriebseinheit (5) ein mittels elektrischer Energie betätigbares Stellmittel (11) aufweist und/oder dass das Stellmittel (11) der Antriebseinheit (5) als ein in zwei Bewegungsrichtungen antreibbarer Motor mit rotatorischer oder linearer Abtriebsbewegung ausgebildet ist, wobei der Motor (11) mittels einer elektrischen Versorgungsenergie (Primärenergie) von der Freigabestellung in die Verriegelungsstellung und mittels der elektrischen Versorgungsenergie (Primärenergie) und/oder der in dem Hilfsenergiespeicher (25) gespeicherten Sekundärenergie von der Verriegelungsstellung in die Freigabestellung verbringbar ist.

4. Vorrichtung nach einem der Ansprüche 1 bis 3, **dadurch gekennzeichnet, dass** der Motor (11) der Antriebseinheit (5) in der Verriegelungsstellung des Verriegelungselements (4) dauerbestrombar ist, wobei das Verriegelungselement (4) bei einer Unterbrechung der Primärenergieversorgung mittels der in dem Hilfsenergiespeicher (25) gespeicherten Sekundärenergie aus der Verriegelungsstellung in die Freigabestellung verbringbar ist.

5. Vorrichtung nach einem der Ansprüche 1 bis 4, **dadurch gekennzeichnet, dass** der Hilfsenergiespeicher (25) als ein auf einer dem Motor (11) zugeordneten Motorwelle (12) angeordnetes Federelement ausgebildet ist.

6. Vorrichtung nach einem der Ansprüche 1 bis 5, **dadurch gekennzeichnet, dass** das Verriegelungselement (4) als ein Steuernocken mit einer Steuerkontur (13) ausgebildet ist und/oder dass die Steuerkontur (13) des Steuernockens (4) derart ausgeformt ist, dass ein erster Steuerkonturabschnitt (14) in der Freigabestellung an einem ersten Anschlag (15) und ein zweiter Steuerkonturabschnitt (16) in der Verriegelungsstellung an einem zweiten Anschlag (17) und/oder einem Sensor (6) anliegt.

7. Vorrichtung nach einem der Ansprüche 1 bis 6, **dadurch gekennzeichnet, dass** die Steuerkontur (13) einen Blockierabschnitt (26) aufweist, der derart angeformt ist, dass die Bewegung des Verriegelungselements (4) von der Freigabestellung in die Verriegelungsstellung blockiert ist, sofern sich das Rastelement (21) nicht in der Raststellung befindet.

8. Vorrichtung nach einem der Ansprüche 1 bis 7, **dadurch gekennzeichnet, dass** dem Rastelement (21) und/oder dem Verriegelungselement (4) wenigstens eine Endlagenbestimmungseinheit (19) zur Erzeugung eines Endlagensignals zugeordnet ist derart, dass mittels des Endlagensignals die Raststellung des Rastelements (21) und/oder die Verriegelungsstellung des Verriegelungselements (4) detektierbar ist.

9. Vorrichtung nach einem der Ansprüche 1 bis 8, **dadurch gekennzeichnet, dass** die Endlagenbestimmungseinheit (19) den mittels des Rastelements (21) und/oder des Verriegelungselements (4) betätigbaren Sensor (6) aufweist.

10. Vorrichtung nach einem der Ansprüche 1 bis 9, **dadurch gekennzeichnet,**
- **dass** der Blockierabschnitt (26) des Verriegelungselements (4) derart ausgebildet ist, dass das Verriegelungselement (4) allein bei Anordnung des Rastelements (21) in der Raststellung in die Verriegelungsstellung verbringbar ist, und/oder
- **dass** die Steuerkontur (13) des Steuernockens (4) derart geformt ist, dass der erste Steuerkonturabschnitt (14) in der Freigabestellung an dem ersten Anschlag (15) anliegt, dass der zweite Steuerkonturabschnitt (16) in der Verriegelungsstellung an dem zweiten Anschlag (17) und/oder an dem Sensor (6) anliegt und dass der Blockierabschnitt (26) an dem Rastelement (21) abgestützt ist zur Blockierung der Verbringung des Verriegelungselements (4) von der Freigabestellung in die Verriegelungsstellung bei Nichtpositionierung des Rastelements (21) in dessen Raststellung.

11. Verfahren zur Verriegelung eines Steckers (2) in einer Steckdose (3), die in einer Ladesäule zur Bereitstellung elektrischer Energie für ein elektrisch betreibbares Fahrzeug oder in dem mittels elektrischer Energie betreibbaren Fahrzeug integriert angeordnet ist, wobei ein mittels einer elektrischen Antriebseinheit (5) betätigbares Verriegelungselement (4) von einer Verriegelungsstellung, in der ein beweglich gelagertes Rastelement (21) in eine Ausnehmung (24) des Steckers (2) eingreift zur Verbindung desselben mit der Steckdose (3), in eine Freigabestellung verbracht wird, in der das Rastelement (21) freigegeben wird zur Entnahme des Steckers (2), wobei das Verriegelungselement (4) bei einer Unterbrechung einer Primärenergieversorgung mittels einer in einem der Antriebseinheit (5) zugeordneten Hilfsenergiespeicher (25) bereitgestellten Hilfsenergie (Sekundärenergie) wenigstens einmalig von der Verriegelungsstellung in die Freigabestellung verbracht wird, und wobei der Hilfsenergiespeicher (25) beim Verbringen des Verriegelungselementes (4) von der Freigabestellung in die Verriegelungsstellung mit Sekundärenergie geladen wird, **dadurch gekennzeichnet, dass** mittels des als ein Akkumulator und/oder Kondensator ausgebildeten Hilfsenergiespeichers (25) wenigstens eine weitere Notfallfunktion der Ladesäule mit Hilfsenergie versorgt wird.

12. Verfahren nach Anspruch 11, **dadurch gekennzeichnet, dass** ein bei Erreichen der Verriegelungsstellung mittels einer Endlagenbestimmungseinrichtung (19) bestimmbares Endlagensignal einer Steuereinheit zugeführt wird zur Ausschaltung und/oder Bremsung eines Stellmittels (11) der Antriebseinheit (5) und/oder zur Freigabe eines Ladevorgangs des Fahrzeugs.

13. Verfahren nach Anspruch 11 oder 12, **dadurch gekennzeichnet,**
- **dass** die Verbringung des Verriegelungselements (4) von der Freigabestellung in die Verriegelungsstellung durch das Rastelement (21) blockiert wird, sofern das Rastelement (21) nicht in der Raststellung positioniert ist, und/oder
- **dass** mittels der Steuereinheit aus dem Ausbleiben des Endlagensignals beim Blockieren des Verriegelungselements (4) an dem Rastelement (21) auf einen nicht korrekten Sitz des Steckers (2) in der Steckdose (3) geschlossen wird.

## Claims

1. Device for locking a connector (2) in a socket (3) which is disposed in an integrated manner in a charge column or in a vehicle which can be driven by electrical energy, wherein by means of the charge column, electrical energy can be provided for the electrically drivable vehicle, having a movably mounted latching element (21) which, in a latching position thereof, engages in an aperture (24) of the connector (2) in order to connect same to the socket (3), and having a locking element (4) which is allocated to the latching element (21) and which can be actuated by a drive unit (5), wherein, when the locking element (4) is in a locking position, the latching element (21) can be locked in the aperture (24) of the connector (2), wherein, when the locking element (4) is in a release position, the latching element (21) can be released in order to remove the connector (2), and wherein an auxiliary energy store (25) is allocated to the drive unit (5) and that a storage volume of the auxiliary energy store (25) is sized such that the locking element (4) can be moved at least once from the locking position into the release position by means of the energy (secondary energy) which can be provided in the auxiliary energy store (25), **characterised in that** a capacitor and/or an accumulator is designed as the auxiliary energy store (25) and, in dependence upon the occurrence of an emergency operation signal, supplies the electrical energy to actuate the locking element (4).

2. Device as claimed in claim 1, **characterised in that** the secondary energy can be charged to the auxiliary energy store (25) when the locking element (4) is being moved from the release position into the locking position.

3. Device as claimed in claim 1 or 2, **characterised in that** the drive unit (5) comprises a setting means (11) which can be activated by means of electrical energy, and/or that the setting means (11) of the drive unit (5) is designed as a motor which can be driven in two movement directions with a rotational or linear driving movement, wherein the motor (11) can be moved from the release position into the locking position by means of electrical supply energy (primary energy) and from the locking position into the release position by means of the electrical supply energy (primary energy) and/or the secondary energy stored in the auxiliary energy store (25).

4. Device as claimed in any one of claims 1 to 3, **characterised in that** the motor (11) of the drive unit (5) can be permanently energised when the locking element (4) is in the locking position, wherein the locking element (4) can be moved from the locking position into the release position when there is an interruption in the primary energy supply by means of the secondary energy stored in the auxiliary energy store (25).

5. Device as claimed in any one of claims 1 to 4, **characterised in that** the auxiliary energy store (25) is designed as a spring element disposed on a motor shaft (12) allocated to the motor (11).

6. Device as claimed in any one of claims 1 to 5, **characterised in that** the locking element (4) is designed as a control cam with a control contour (13), and/or that the control contour (13) of the control cam (4) is formed in such a way that, in the release position, a first control contour portion (14) lies against a first stop (15) and, in the locking position, a second control contour portion (16) lies against a second stop (17) and/or against the sensor (6).

7. Device as claimed in any one of claims 1 to 6, **characterised in that** the control contour (13) comprises a blocking portion (26) which is integrally formed in such a way that the movement of the locking element (4) from the release position into the locking position is blocked provided that the latching element (21) is not in the latching position.

8. Device as claimed in any one of claims 1 to 7, **characterised in that** the latching element (21) and/or the locking element (4) is/are allocated at least one end position determining unit (19) to generate an end position signal, in such a way that, by means of the end position signal, the latching position of the latching element (21) and/or the locking position of the locking element (4) can be detected.

9. Device as claimed in any one of claims 1 to 8, **characterised in that** the end position determining unit (19) comprises the sensor (6) which can be actuated by means of the latching element (21) and/or of the locking element (4).

10. Device as claimed in any one of claims 1 to 9, **characterised in that**
- the blocking portion (26) of the locking element (4) is formed in such a way that the locking element (4) can be moved into the locking position only when the latching element (21) is in the latching position, and/or
- the control contour (13) of the control cam (4) is formed in such a way that, in the release position, the first control contour portion (14) lies against the first stop (15), that, in the locking position, the second control contour portion (16) lies against the second stop (17) and/or against the sensor (6) and that the blocking portion (26) is supported against the latching element (21) in order to block the locking element (4) from being moved from the release position into the locking position when the latching element (21) is not positioned in the latching position thereof.

11. Method for locking a connector (2) in a socket (3), which is disposed in an integrated manner in a charge column for providing electrical energy for an electrically drivable vehicle or in the vehicle which can be driven by electrical energy, wherein a locking element (4), which can be actuated by means of an electric drive unit (5), is moved from a locking position, in which a moveably mounted latching element (21) engages in an aperture (24) of the connector (2) for connection thereof to the socket (3), into a release position in which the latching element (21) is released in order to remove the connector (2), wherein during an interruption in a primary energy supply, the locking element (4) is moved at least once from the locking position into the release position by means of auxiliary energy (secondary energy) provided in an auxiliary energy store (25) allocated to the drive unit (5), and wherein the auxiliary energy store (25) is charged with secondary energy when the locking element (4) is being moved from the release position into the locking position, **characterised in that**, by means of the auxiliary energy store (25) designed as an accumulator and/or capacitor, at least one further emergency function of the charge column is supplied with auxiliary energy.

12. Method as claimed in claim 11, **characterised in that** an end position signal, which can be determined by means of an end position determining device (19) when the locking position is reached, is supplied to a control unit in order to switch off and/or brake a setting means (11) of the drive unit (5) and/or in order to release a charging process of the vehicle.

13. Method as claimed in claim 11 or 12, **characterised in that**
- the locking element (4) is blocked from being moved from the release position into the locking position by the latching element (21) provided that the latching element (21) is not positioned in the latching position, and/or
- when the end position signal is absent during blocking of the locking element (4) on the latching element (21), the control unit concludes that the connector (2) is not correctly seated in the socket (3).

## Revendications

1. Dispositif de verrouillage d'un connecteur (2) dans une prise (3) qui est disposée de manière intégrée dans une borne de recharge ou dans un véhicule pouvant entraîné au moyen d'énergie électrique, dans lequel de l'énergie électrique pour le véhicule pouvant être entraîné de manière électrique peut être fournie au moyen de la borne de recharge, comportant un élément d'encliquetage (21) monté de manière mobile qui, dans une position d'encliquetage de celui-ci, a prise dans un évidement (24) du connecteur (2) pour la liaison de celui-ci avec la prise (3), et comportant un élément de verrouillage (4) associé à l'élément d'encliquetage (21), lequel élément de verrouillage est actionnable au moyen d'une unité d'entraînement (5), dans lequel l'élément d'encliquetage (21), dans une position de verrouillage de l'élément de verrouillage (4), est verrouillable dans l'évidement (24) du connecteur (2), dans lequel l'élément d'encliquetage (21), dans une position de libération de l'élément de verrouillage (4), peut être libéré pour le retrait du connecteur (2), et dans lequel un réservoir d'énergie auxiliaire (25) est associé à l'unité d'entraînement (5), et dans lequel un volume de stockage du réservoir d'énergie auxiliaire (25) est dimensionné de manière à ce que l'élément de verrouillage (4) puisse être mis au moins une fois de la position de verrouillage en la position de libération au moyen de l'énergie (énergie secondaire) pouvant être fournie dans le réservoir d'énergie auxiliaire (25), **caractérisé en ce qu'**un condensateur et/ou un accumulateur est réalisé en tant que réservoir d'énergie auxiliaire (25) qui fournit l'énergie électrique pour l'actionnement de l'élément de verrouillage (4) en fonction de l'apparition d'un signal de fonctionnement de secours.

2. Dispositif selon la revendication 1, **caractérisé en ce que** l'énergie secondaire peut être chargée sur le réservoir d'énergie auxiliaire (25) lors la mise de l'élément de verrouillage (4) de la position de libération (4) en la position de verrouillage.

3. Dispositif selon la revendication 1 ou 2, **caractérisé en ce que** l'unité d'entraînement (5) présente un moyen de réglage (11) actionnable au moyen d'énergie électrique et/ou **en ce que** le moyen de réglage (11) de l'unité d'entraînement (5) est réalisé en tant qu'un moteur pouvant être entraîné dans deux sens de mouvement, ayant un mouvement de sortie rotatif ou linéaire, dans lequel le moteur (1) peut être mis de la position de libération en la position de verrouillage au moyen d'une énergie d'alimentation électrique (énergie primaire) et de la position de verrouillage en la position de libération au moyen de l'énergie d'alimentation électrique (énergie primaire) et/ou de l'énergie secondaire stockée dans le réservoir d'énergie auxiliaire (25).

4. Dispositif selon l'une quelconque des revendications 1 à 3, **caractérisé en ce que** le moteur (11) de l'unité d'entraînement (5) peut être alimenté en courant de manière continue en position de verrouillage de l'élément de verrouillage (4), dans lequel l'élément de verrouillage (4), lors d'une interruption de l'alimentation en énergie primaire, peut être mis de la position de verrouillage en la position de libération au moyen de l'énergie secondaire stockée dans le réservoir d'énergie auxiliaire (25).

5. Dispositif selon l'une quelconque des revendications 1 à 4, **caractérisé en ce que** le réservoir d'énergie auxiliaire (25) est réalisé en tant qu'un élément à ressort disposé sur un arbre de moteur (12) associé au moteur (11).

6. Dispositif selon l'une quelconque des revendications 1 à 5, **caractérisé en ce que** l'élément de verrouillage (4) est réalisé en tant qu'une came de commande dotée d'un contour de commande (13) et/ou **en ce que** le contour de commande (13) de la came de commande (4) est formé de manière à ce qu'une première section (14) de contour de commande s'appuie contre une première butée (15) en position de libération et **en ce qu'**une deuxième section (16) de contour de commande s'appuie contre une deuxième butée (17) et/ou un capteur (6) en position de verrouillage.

7. Dispositif selon l'une quelconque des revendications 1 à 6, **caractérisé en ce que** le contour de commande (13) présente une section de blocage (26) qui est formée de manière à ce que le mouvement de l'élément de verrouillage (4) de la position de libération en la position de verrouillage soit bloqué si l'élément d'encliquetage (21) ne se trouve pas en position d'encliquetage.

8. Dispositif selon l'une quelconque des revendications 1 à 7, **caractérisé en ce qu'**au moins une unité de détermination de position de fin de course (19) destinée à générer un signal de position de fin de course est associée à l'élément d'encliquetage (21) et/ou à l'élément de verrouillage (4) de manière à ce qu'au moyen du signal de position de fin de course, la position d'encliquetage de l'élément d'encliquetage (21) et/ou la position de verrouillage de l'élément de verrouillage (4) soit détectable.

9. Dispositif selon l'une quelconque des revendications 1 à 8, **caractérisé en ce que** l'unité de détermination de position de fin de course (19) présente le capteur (6) actionnable au moyen de l'élément d'encliquetage (21) et/ou de l'élément de verrouillage (4).

10. Dispositif selon l'une quelconque des revendications 1 à 9, **caractérisé en ce**
- **que** la section de blocage (26) de l'élément de verrouillage (4) est réalisée de manière à ce que l'élément de verrouillage (4) puisse être mis en la position de verrouillage rien que par la disposition de l'élément d'encliquetage (21) en position d'encliquetage et/ou
- en ce que le contour de commande (13) de la came de commande (4) est formé de manière à ce que la première section (14) de contour de commande s'appuie contre la première butée (15) en position de libération, que la deuxième section (16) de contour de commande s'appuie contre la deuxième butée (17) et/ou au capteur (6) en position de verrouillage, et que la section de blocage (26) soit soutenue sur l'élément d'encliquetage (21) pour bloquer la mise de l'élément de verrouillage (4) de la position de libération en la position de verrouillage en cas de non positionnement de l'élément d'encliquetage (21) en sa position d'encliquetage.

11. Procédé de verrouillage d'un connecteur (2) dans une prise (3) qui est disposée de manière intégrée dans une borne de recharge pour la fourniture d'énergie électrique pour un véhicule pouvant être entraîné de manière électrique ou dans le véhicule pouvant être entraîné au moyen d'énergie électrique, dans lequel procédé un élément de verrouillage (4) actionnable au moyen d'une unité d'entraînement (5) électrique est mis d'une position de verrouillage, dans laquelle un élément d'encliquetage (21) monté de manière mobile a prise dans un évidement (24) du connecteur (2) pour la liaison de celui-ci avec la prise (3), en une position de libération dans laquelle l'élément d'encliquetage (21) est libéré pour le retrait du connecteur (2), dans lequel l'élément de verrouillage (4), lors d'une interruption d'une alimentation en énergie primaire, est mis au moins une fois de la position de verrouillage en la position de libération au moyen d'une énergie auxiliaire (énergie secondaire) fournie dans un réservoir d'énergie auxiliaire (25) associé à l'unité d'entraînement (5), et dans lequel le réservoir d'énergie auxiliaire (25), lors de la mise de l'élément de verrouillage (4) de la position de libération en la position de verrouillage, est chargé avec de l'énergie secondaire, **caractérisé en ce qu'**au moins une fonction de secours supplémentaire de la borne de recharge est alimentée en énergie auxiliaire au moyen du réservoir d'énergie auxiliaire (25) réalisé en tant qu'un accumulateur et/ou un condensateur.

12. Procédé selon la revendication 11, **caractérisé en ce qu'**un signal de position de fin de course déterminable au moyen d'un dispositif de détermination de position de fin de course (19) est amené à une unité de commande lors de l'obtention de la position de verrouillage dans le but de mettre hors fonction et/ou de freiner un moyen de réglage (11) de l'unité d'entraînement (5) et/ou de libérer une opération de recharge du véhicule.

13. Procédé selon la revendication 11 ou 12, **caractérisé**
- **en ce que** la mise de l'élément de verrouillage (4) de la position de libération en la position de verrouillage par l'élément d'encliquetage (21) est bloquée si l'élément d'encliquetage (21) n'est pas positionné en position d'encliquetage et/ou
- **en ce qu'**il en est conclu un logement non correct du connecteur (2) dans la prise (3) au moyen de l'unité de commande en raison de l'absence du signal de position de fin de course lors du blocage de l'élément de verrouillage (4) sur l'élément d'encliquetage (21).
